# EUROPÄISCHE PATENTANMELDUNG

(11) **EP 2 465 636 A1**
(43) Veröffentlichungstag der Anmeldung: **20.06.2012**
(21) Anmeldenummer: 10195281.0
(22) Anmeldetag: 16.12.2010
(51) Int. Cl.: B23P 9/04, B06B 3/00, B24B 1/04, C21D 7/04, F01D 5/28

(54) **Verfahren und Vorrichtung zum Ausbilden eines Bereichs eines Bauteils mit einer vorbestimmten Kontur**

(71) Anmelder: MTU Aero Engines GmbH, 80995 München (DE)
(72) Erfinder: Bamberg, Joachim, Dr., 85221 Dachau (DE); Hessert, Roland, Dr., 82211 Herrsching (DE)

(57) **Zusammenfassung**

Die Erfindung betrifft ein Verfahren zum Ausbilden eines Bereichs eines Bauteils mit einer vorbestimmten Kontur durch Ultraschall-Schlagbehandlung, wobei das Verfahren die folgenden Schritte aufweist: Bereitstellen wenigstens einer Sonotrode mit einem Sonotrodenkopf, wobei der Sonotrodenkopf eine Aufnahme zum zumindest teilweisen Aufnehmen des mit der vorbestimmten Kontur auszubildenden Bereichs des Bauteils aufweist; Zumindest teilweises Aufnehmen des mit der vorbestimmten Kontur auszubildenden Bereichs des Bauteils in der Aufnahme des Sonotrodenkopfes; und Bewegen der Sonotrode und des Bauteils relativ zueinander zum Ausbilden des dabei durch die Aufnahme des Sonotrodenkopfes gefiihrten, Bereichs des Bauteils mit der vorbestimmten Kontur durch Ultraschall-Schlagbehandlung.

## Beschreibung

Die vorliegende Erfindung betrifft ein Verfahren und eine Vorrichtung zum Ausbilden zumindest eines Bereichs eines Bauteils mit einer vorbestimmten Kontur, insbesondere einer Bauteilkante oder Bauteilspitze eines Bauteils mit einer Verrundung. Das Bauteil ist insbesondere ein Schaufelelement, beispielsweise eine Schaufel einer Gasturbine, z.B. einer Gasturbine eines Flugzeugtriebwerks.

Derzeit werden bei Schaufelkanten überwiegend spanend hergestellt. Vereinzelt erfolgt die Verrundung der Schaufelkanten auch durch ein Abrasiv-Strahlen. Vor allem bei kleinen Kantenradien können geometrische Vorgaben nicht eingehalten werden. Das Abrasiv-Strahlen erzeugt neben plastischen Verformungen auch in verstärktem Maße Anrisse im Randbereich der Schaufelkanten. Des Weiteren führt das Strahlen zu einer größeren Oberflächenrauheit.

Aus dem Stand der Technik, wie er in der DE 103 19 020 A1 offenbart ist, ist ein Verfahren und eine Vorrichtung zum Verrunden von Kanten von Bauteilen bekannt. Dabei wird ein großteils aus abrasiven Partikeln bestehender Strahl mit seiner Mitte exakt tangential zu einer Winkelhalbierenden zwischen zwei Oberflächen an einer Kante eines Bauteils gelenkt und mit definiertem Vorschub in der Weise relativ zum Bauteil längs der Kante bewegt, dass ein definierter Abtrag des Bauteilmaterials unter Verrundung zu den Oberflächen hin erfolgt.

Vor diesem Hintergrund liegt der Erfindung nun die Aufgabe zugrunde, ein verbessertes Verfahren und eine verbesserte Vorrichtung zum Erzeugen einer vorbestimmten oder definierten Kontur, insbesondere einer Verrundung einer Bauteilkante, eines Bauteils bereitzustellen.

Gemäß der Erfindung wird ein Verfahren zum Ausbilden eines Bereichs eines Bauteils mit einer vorbestimmten Kontur durch Ultraschall-Schlagbehandlung (UIT-Ultrasonic Impact Treatment) bereitgestellt, wobei das Verfahren die Schritte aufweist: Bereitstellen wenigstens einer Sonotrode mit einem Sonotrodenkopf, wobei der Sonotrodenkopf eine Aufnahme zum zumindest teilweisen Aufnehmen eines mit einer vorbestimmten Kontur auszubildenden Bereichs des Bauteils aufweist; Zumindest teilweises Aufnehmen des mit der vorbestimmten Kontur auszubildenden Bereichs des Bauteils in der Aufnahme des Sonotrodenkopfes; Bewegen der Sonotrode und des Bauteils relativ zueinander zum Ausbilden des dabei durch die Aufnahme des Sonotrodenkopfes gefiihrten, Bereichs des Bauteils mit der vorbestimmten Kontur durch Ultraschall-Schlagbehandlung (UIT) bzw. Ultrasonic Impact Treatment.

Das Verfahren hat den Vorteil, dass es die Oberfläche des Bauteils gleichzeitig verfestigen kann, wobei die Randschicht plastisch verformt wird und randnahe Druckeigenspannungen entstehen. Die erzeugte Oberflächenrauheit ist gering.

Des Weiteren wird gemäß der Erfindung eine Vorrichtung zum Ausbilden eines Bereichs eines Bauteils mit einer vorbestimmten Kontur durch Ultraschall-Schlagbehandlung bereitgestellt, aufweisend: wenigstens eine Sonotrode mit einem Sonotrodenkopf, wobei der Sonotrodenkopf eine Aufnahme zum zumindest teilweisen Aufnehmen des mit der vorbestimmten Kontur auszubildenden Bereichs des Bauteils aufweist.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform wird die Sonotrode mit der Aufnahme in dem Sonotrodenkopf entlang des mit der vorbestimmten Kontur auszubildenden Bereichs des Bauteils und/oder das Bauteil mit seinem mit der vorbestimmten Kontur auszubildenden Bereich entlang der Aufnahme des Sonotrodenkopfes der Sonotrode bewegt bzw. geführt. Hierbei bearbeitet oder verformt und verfestigt die Sonotrode, während des Bewegens der Sonotrode relativ zu dem Bauteil, den jeweils in der Aufnahme aufgenommenen Bereich des Bauteils.

In einer weiteren erfindungsgemäßen Ausführungsform erfolgt ein manuelles oder maschinelles Bewegen des Sonotrodenkopfes und/oder des Bauteils, wobei das maschinelle Bewegen mittels eines Manipulators, insbesondere eines Roboters, erfolgt. Das maschinelle Bewegen der Sonotrode und ihres Sonotrodenkopfes, beispielsweise mittels eines Roboters, hat den Vorteil, dass die Aufnahme des Sonotrodenkopfes sehr exakt entlang des zu bearbeitenden Bereichs des Bauteils geführt werden kann, insbesondere wenn dieser Bereich einen komplexeren Verlauf, wie beispielsweise einen gekrümmten oder kurvigen Verlauf, aufweist. Ein manuelles Bewegen der Sonotrode hat wiederum den Vorteil, dass die Sonotrode besonders kostengünstig ausgeführt werden kann.

In einer anderen erfindungsgemäßen Ausführungsform ist die Aufnahme des Sontrodenkopfes senkrecht zu dem mit der vorbestimmten Kontur auszubildenden Bereich des Bauteils angeordnet oder der mit der vorbestimmten Kontur auszubildende Bereich des Bauteils ist in der Aufnahme des Sonotrodenkopfes senkrecht aufgenommen.

Gemäß einer weiteren erfindungsgemäßen Ausführungsform erfolgt ein Oberflächenverfestigen eines Bereichs eines Schaufelelements, insbesondere eines Schaufelelements einer Gasturbine, vorzugsweise einer Gasturbine eines Triebwerks. Gasturbinenschaufeln sind besonders hoch belastete Teile. Das UIT- oder Ultraschall-Schlagbehandlungs- oder Ultraschallhämmer- bzw. Ultrasonic Impact Treatment-Verfahren erlaubt eine Herstellung solcher Schaufelelemente mit einer geringen Oberflächenrauheit und einer plastischen Verformung im Randbereich, sowie das Erzeugen von Druck-Eigenspannungen.

In einer weiteren erfindungsgemäßen Ausführungsform erfolgt ein Oberflächenbearbeiten einer Schaufelkante oder Schaufelspitze des Schaufelelements, wobei die Aufnahme des Sonotrodenkopfes eine vorbestimmte Schaufelkantenkontur aufweist. Dies hat den Vorteil, dass die Schaufelkante oder Schaufelspitze mit einer vorbestimmten bzw. konstruktiv vorgegebenen Kontur hergestellt werden kann.

In einer anderen erfindungsgemäßen Ausführungsform ist die Aufnahme des Sonotrodenkopfes mit einer Verrundung versehen oder ausgebildet zum Verrunden der Schaufelkante des Schaufelelements. Eine solche verrundete Schaufelkante kann in einigen Ausführungsformen von Schaufelelementen ein verbessertes aerodynamisches oder strömungstechnisches Verhalten des Schaufelelements bereitstellen.

Gemäß einer weiteren erfindungsgemäßen Ausführungsform ist die Aufnahme als Vertiefung oder Rille in dem Sonotrodenkopf ausgebildet, insbesondere als bogenförmige oder kreisbogenförmige Vertiefung oder Rille. Die bogenförmige Aufnahme hat den Vorteil, dass der Sonotrodenkopf sich leicht entlang eines zu bearbeitenden Bereichs des Bauteils bewegen lässt, insbesondere wenn das Bauteil einen komplizierten Verlauf aufweist, wie beispielsweise einen kurvigen oder eckigen Verlauf.

Die Erfindung wird nachfolgend anhand der in den schematischen Figuren der Zeichnungen angegebenen Ausführungsbeispiele näher erläutert. Es zeigen:
Fig. 1 eine Perspektivansicht eines Schaufelelements, welches mittels einer Sonotrode bearbeitet wird gemäß einer Ausführungsform der Erfindung;
Fig. 2 eine Perspektivansicht des Sontotrodenkopfes der Sonotrode gemäß Fig. 1;
Fig. 3 einen Querschnitt des Sonotrodenkopfes gemäß Fig. 2; und
Fig. 4 ein Ablaufdiagramm eines Ausführungsbeispiels des erfindungsgemäßen Verfahrens zum Oberflächenverfestigen eines Bereichs eines Bauteils.

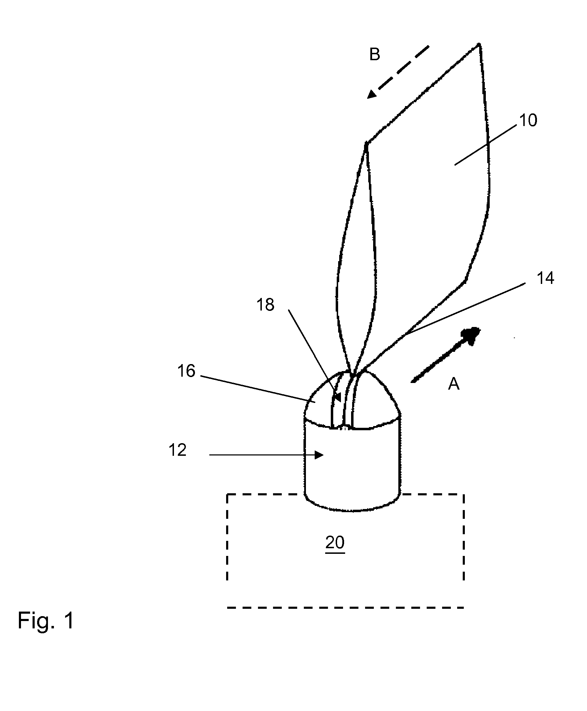

Fig. 1 zeigt eine Perspektivansicht eines Schaufelelements 10, welches mittels einer Sonotrode 12 bearbeitet wird gemäß einer Ausführungsform der Erfindung.

In der Regel entsprechen bisher die fertigungstechnisch aufwendig hergestellten Schaufelkanten von Schaufeln bzw. Laufschaufeln, beispielsweise einer Gasturbine eines Flugtriebwerks, nicht genau den konstruktiv vorgegebenen Konturen.

Gemäß der Erfindung werden daher die Schaufelkanten 14 von Schaufeln bzw. Schaufelelementen 10, insbesondere einer Gasturbine eines Triebwerks, durch das UIT (Ultrasonic Impact Treatment oder Ultraschall-Schlagbehandlung oder Ultraschallhämmer) -Verfahren bearbeitet oder verformt, beispielsweise verrundet, wobei bei dem erfindungsgemäßen Verfahren eine Sonotrode 12 mit einem Sonotrodenkopf 16 mit einer Aufnahme 18 zum Aufnehmen eines mit einer vorbestimmten Kontur auszubildenden Bereichs eines Bauteils eingesetzt wird. Der Sonotrodenkopf 16 kann dabei außerdem insbesondere als formangepasster Sonotrodenkopf 16 ausgebildet sein. Die Schaufelkanten 14 der Lauf- oder Leitschaufeln oder Schaufelelemente 10 können dabei mittels des UIT-Verfahrens insbesondere verrundet und/oder mit einer Wellenstruktur ausgebildet und zusätzlich auch verfestigt werden.

In dem in Fig. 1 gezeigten Ausführungsbeispiel ist das Schaufelelement 10 stark vereinfacht dargestellt, wobei es eine Schaufelspitze oder Schaufelkante 14 aufweist, die durch das erfindungsgemäße UIT-Verfahren bearbeitet wird, um die Schaufelspitze oder Schaufelkante 14 zu verfestigen und beispielsweise zusätzlich zu verrunden.

Das Ultraschall-Schlagbehandlungs- oder Ultraschallhämmer- oder Ultrasonic Impact Treamtent (UIT) - Verfahren basiert auf einer Umwandlung von Schwingungen, insbesondere harmonischen Schwingungen, durch einen Wandler bzw. Ultraschallwandler oder eine Sonotrode in mechanische Impulse und hochfrequente Ultraschallenergie, sowie deren Übertragung auf eine zu behandelnde Oberfläche.

Hierbei wird mit dem Ultraschallwandler oder der Ultraschall-Sonotrode 12 eine Schwingung, insbesondere eine harmonische Schwingung, in mechanische Impulse umgewandelt. Dabei erfolgt die Behandlung mittels des UIT-Verfahrens durch ein mechanisches Hämmern mit dem Sonotrodenkopf 16 der Sonotrode 12, mit einer Frequenz im Ultraschallbereich.

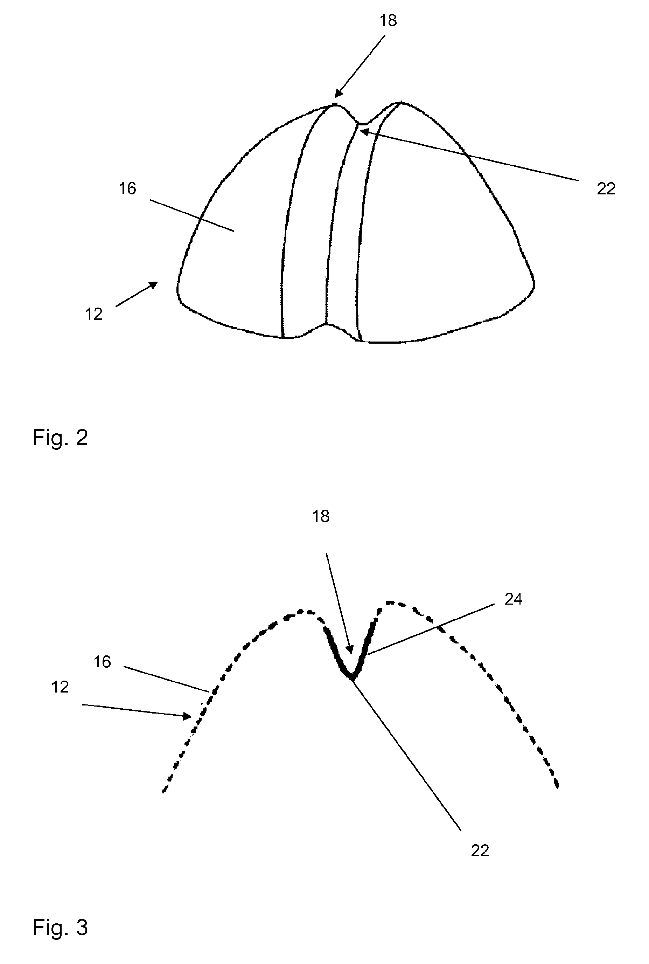

Die in dem Ausführungsbeispiel gezeigte erfindungsgemäße Vorrichtung weist eine Sonotrode 12 oder eine Ultraschall-Sonotrode auf, welche einen Sonotrodenkopf 16 aufweist, mit einer Aufnahme 18 zur zumindest teilweisen Aufnahme des zu bearbeitenden Bereichs 14 eines Bauteils, beispielsweise einer Bauteilkante 14 oder Bauteilspitze in dem Ausfiihrungsbeispiel in Fig. 1. Das Bauteil ist dabei in Fig. 1 ein Schaufelelement 10 mit einer Schaufelkante 14 als zu bearbeitendem oder verformendem Bereich des Schaufelelements 10. Der Bereich 14 wird dabei mit einer vorbestimmten Kontur ausgebildet, beispielsweise einer Verrundung. Die Aufnahme 18 8 des Sonotrodenkopfes 16 ist beispielsweise formangepasst ausgebildet und entspricht der vorbestimmten oder gewünschten bzw. definierten Kontur oder dem vorbestimmten oder gewünschten bzw. definierten Querschnitt der Schaufelkante oder Schaufelspitze 14 des Schaufelelements 10, wie im Nachfolgenden anhand von Fig. 2 und 3 gezeigt ist. Die Aufnahme 18 ist dabei z.B. als Aussparung oder Rille in dem Sonotrodenkopf 16 ausgebildet.

Die Sonotrode 12 wird mit ihrem Sonotrodenkopf 16 entlang der Schaufelkante 14 des Schaufelelements 10 bewegt, wie mit dem Pfeil A in Fig. 1 angedeutet ist. Die Schaufelkante 14 des Schaufelelements 10 ist hierbei in der Aufnahme 18 des Sonotrodenkopfes 16 aufgenommen und der Sonotrodenkopf 16 wird mit seiner Aufnahme 18, insbesondere senkrecht zu der Schaufelkante 14, entlang dem Schaufelelement 10 in Längsrichtung in dem Ausfiihrungsbeispiel in Fig. 1 bewegt oder geführt.

Statt oder zusätzlich zu der Sonotrode 12 und ihrem Sonotrodenkopf 16 kann auch das Schaufelelement 10 mit seiner Schaufelkante 14 bewegt werden. In dem Ausführungsbeispiel in Fig. 1 kann das Schaufelelement 10 mit seiner Schaufelkante 14 entlang der Aussparung des Sonotrodenkopfes 16 bewegt oder geführt werden, wie in Fig. 1 mit einem gestrichelten Pfeil B angedeutet ist.

Die Sonotrode 12 kann dabei mit ihrem Sonotrodenkopf 16 manuell und/oder maschinell bewegt oder geführt werden. Entsprechend kann auch das Schaufelelement 10 mit seiner Schaufelkante 14 manuell und/oder maschinell bewegt oder geführt werden. Zur maschinellen Bewegung oder Führung der Sonotrode 12 mit ihrem Sonotrodenkopf 16 bzw. des Schaufelelements 10 mit seiner Schaufelkante 14 kann ein Manipulator vorgesehen werden, beispielsweise ein Roboter. Der Manipulator 20 für die Sonotrode 12 ist in Fig. 1 mit einer gepunkteten Linie angedeutet

Der Sonotrodenkopf 16 der Sonotrode 12 ist beispielsweise aus Hartmetall, um die Schaufelkante 14 des Schaufelelements 10 zu bearbeiten. Bei dem UIT-Verfahren werden Schwingungen, insbesondere harmonischen Schwingungen, durch die Sonotrode 12 in mechanische Impulse und hochfrequente Energie, z.B. Ultraschallenergie, umgewandelt und diese mittels des Sonotrodenkopfes 16 auf eine zu behandelnde Oberfläche, hier die Schaufelkante 14 des Schaufelelements 10, übertragen. Die Erfindung ist dabei nicht auf ein Hartmetall für den Sonotrodenkopf 16 beschränkt. Grundsätzlich kann der Sonotrodenkopf 16 aus jedem Material oder jeder Materialkombination hergestellt sein, welches bzw. welche geeignet ist, mechanische Impulse des Sonotrodenkopfes 16 auf ein Bauteil zu übertragen, um dieses mit einer vorbestimmten Kontur auszubilden, z.B. zu verrunden, und gleichzeitig oberflächenzuverfestigen.

Durch Bearbeiten oder Mikroschmieden, z.B. Verrunden, der Schaufelkanten 14 mittels des UIT-Verfahrens und des Sonotrodenkopfes 16, insbesondere formangepassten Sonotrodenkopfes 16, können reproduzierbare geometrisch vorgegebene Schaufelkantenprofile mit einer geringen Oberflächenrauheit und einer plastischen Verformung der Randschicht erzielt werden. Des Weiteren können mittels des UIT-Verfahrens Druck-Eigenspannungen bei den Schaufelkanten 14 der Schaufelelemente 10 erzeugt werden. Statt nur einer Sonotrode 12 mit einem Sonotrodenkopf 16 kann auch wenigstens eine weitere, zweite Sonotrode mit einem Sonotrodenkopf vorgesehen werden, zum Bearbeiten eines Teilbereichs des mit einer vorbestimmten Kontur auszubildenden Bereichs 14 des Schaufelelements. Dies ist dann besonders geeignet, wenn der auszubildende Bereich 14 des Schaufelelements 10 ein kompliziertes Kantenprofil ist, mit z.B. mehreren verschieden geformten oder verschieden konturierten Teilbereichen. In diesem Fall kann für jeden Teilbereich eine eigene Sonotrode 12 mit einem Sonotrodenkopf 16 und einem entsprechend der Kontur des Teilbereichs angepassten Aufnahme 18 vorgesehen werden, zum Ausbilden des jeweiligen Teilbereichs mit der vorbestimmten Kontur. Die Sonotroden mit ihren Sonotrodenköpfen und deren Aufnahmen können beispielsweise sequentiell eingesetzt werden, um den in die Teilbereiche unterteilten Bereich 14 oder Gesamtbereich 14 des Schaufelelements 10 mit einer vorbestimmten Kontur auszubilden.

Die jeweilige Sonotrode 12 kann dabei nicht nur das Schaufelelement mit einer verrundeten Schaufelkante oder Schaufelspitze als vorbestimmter Kontur versehen, sondern beispielsweise auch eine oder beide Seiten des Schaufelelements und/oder die Schaufelkante mit einer Wellenform oder Wellenstruktur versehen, was sich bei Ausführungsformen von Schaufelelementen als aerodynamisch vorteilhaft erweisen kann. Das Ausbilden eines Bereichs des Schaufelelements 10 mit einer vorbestimmten Wellenstruktur oder Wellenform kann beispielsweise durch ein Variieren oder gezieltes Variieren der Ultraschallschlag-Leistung oder der Leistung der Sonotrode 12 bzw. deren Sonotrodenkopfes 16 erzielt werden.

Eine konventionelle Kantenherstellung durch spanende Bearbeitung oder Strahlen würde dagegen insbesondere hochbelastete Schaufelkanten mechanisch schwächen. Durch den Einsatz des UIT-Verfahrens können dagegen definierte Schaufelkantenprofile durch plastische Verformung erzeugt und zugleich vorteilhafte Druck-Eigenspannungen eingebracht werden ohne Randschädigungen, wie Risse. Dadurch kann die mechanische Stabilität der bearbeiteten Oberfläche erhöht werden. Außerdem können durch eine optimale Ausgestaltung der Schaufelkanten 14 die aerodynamischen Eigenschaften der Schaufelelemente 10 zusätzlich verbessert werden.

In Fig. 2 ist der Sonotrodenkopf 16 der Sonotrode 12 gemäß Fig. 1 in einer Perspektivansicht gezeigt. Der Sonotrodenkopf 16 weist die Aufnahme 18 zur zumindest teilweisen Aufnahme einer Schaufelkante 14 eines zu bearbeitenden Schaufelelements 10 auf. Die Aufnahme 18 ist, wie zuvor beschrieben, z.B. als eine Rille oder Aussparung ausgebildet. Wie in dem Ausfiihrungsbeispiel in Fig. 2 illustriert ist, verläuft die Aufnahme 18 entlang des Umfangs eines z.B. gewölbten Sonotrodenkopfes 16. Die Aufnahme 18 in Form einer Rille kann beispielsweise formangepasst ausgebildet sein. Dabei kann die Aufnahme 18 in ihrem Querschnitt oder Kontur einer vorbestimmten Kontur oder einem vorbestimmten Querschnitt einer Schaufelkante 14 eines Schaufelelements 10 entsprechen, um die Schaufelkante 14 mit der vorbestimmten, gewünschten Kontur auszubilden. Wie im Nachfolgenden anhand von Fig. 3 erläutert wird, kann die Kontur oder der Querschnitt der Aufnahme 18 des Sonotrodenkopfes 16 beispielsweise V-förmig oder im Wesentlichen V-förmig ausgebildet sein und wahlweise zusätzlich eine abgerundete oder verrundete Spitze 22 aufweisen.

Die Aufnahme 18 kann beispielsweise als bogenförmige oder kreisbogenförmige Rille auf dem Sonotrodenkopf 16 ausgebildet sein, wie in Fig. 1 und 2 illustriert ist. Dabei kann sich die Aufnahme 18 bzw. Rille über den gesamten Umfang, wie in Fig. 1 und 2 illustriert ist, oder einen Teil des Umfangs des Sonotrodenkopfes 16 erstrecken.

Der Sonotrodenkopf 16 kann ebenfalls gewölbt ausgebildet sein. Grundsätzlich kann der Sonotrodenkopf 16 aber auch eckig ausgebildet sein, mit der Aufnahme 18 in Form einer Rille oder einer Aussparung zur zumindest teilweisen Aufnahme einer Schaufelkante 14 eines Schaufelelements 10.

In der Aufnahme 18 des Sonotrodenkopfes 16 ist die Schaufelkante 14 des zu bearbeitenden Schaufelelements 10 z.B. zumindest teilweise aufnehmbar oder führbar, wobei die Kontur oder der Querschnitt der Aufnahme 18 einer vorbestimmten bzw. definierten Kontur oder einem vorbestimmten bzw. definierten Querschnitt der Schaufelkante 14 des Schaufelelements 10 entspricht. Durch eine solche an die Form der Schaufelkante 14 angepasste Aufnahme 18 des Sonotrodenkopfes 16, kann eine Schaufelkante 14 mit einer konstruktiv vorgegebenen Kontur ausgebildet werden. Dabei kann die Aufnahme 18 außerdem z.B. mit einer entsprechenden Verrundung versehen sein, zum Verrunden der Schaufelkante 14. Ebenso kann die Aufnahme 18 auch mit jeder anderen für eine Schaufelkante 14 eines Schaufelelements 10 aerodynamisch oder strömungstechnisch geeigneten Kontur versehen sein, um durch das UIT-Verfahren die Schaufelkante 14 mit einer solchen vorteilhaften Kontur auszubilden.

In Fig. 3 ist der Sonotrodenkopf 16 gemäß Fig. 2 als Querschnitt dargestellt. Dabei ist insbesondere der Querschnitt der Aufnahme 18, hier der Rille in dem Ausführungsbeispiel in Fig. 3, mit der vorbestimmten Schaufelspitzenkontur oder Schaufelkantenkontur 24 gezeigt.

Der Sonotrodenkopf 16 weist dabei die Aufnahme 18 zum zumindest teilweise Aufnehmen der Schaufelkante 14 des Schaufelelements 10 auf. Dabei ist der Querschnitt oder die Kontur der Aufnahme 18 bzw. der Rille formangepasst. Die Rille weist beispielsweise einen im Wesentlichen V-förmigen Querschnitt auf, um die Schaufelkante 14 des Schaufelelements 10 mit einem solchen V-förmigen Querschnitt oder Kontur durch das UIT-Verfahren auszubilden. Dieser Querschnitt oder die Kontur der Rille ist dabei rein beispielhaft und die Erfindung ist nicht auf diesen speziellen Querschnitt beschränkt, sondern der Querschnitt oder die Kontur der Aufnahme 18 kann beliebig variiert werden, abhängig von der gewünschten Form der Schaufelkante oder Schaufelspitze eines Schaufelelements.

Im Falle einer abgerundeten Schaufelkante 14 kann die Aufnahme oder Rille, wie in dem Ausführungsbeispiel in Fig. 3 gezeigt ist, außerdem eine gerundete oder verrundete Spitze oder Kante aufweisen. Durch das UIT-Verfahren und die Aufnahme 18 des Sonotrodenkopfes 16 mit der abgerundeten Spitze oder Kante kann die Schaufelkante 14 an ihrer Spitze oder Kante zusätzlich verrundet ausgebildet werden.

Als Schaufelelement 10 mit einer Schaufelkante 14 können dabei insbesondere Schaufeln oder Laufschaufeln von Laufrädern mittels des UIT-Verfahrens und des speziell geformten Sonotrodenkopfes 16 der Sonotrode 12 bearbeitet oder nachbehandelt werden. Insbesondere können Triebwerksschaufeln z.B. der Gasturbine eines Triebwerks bearbeitet werden.

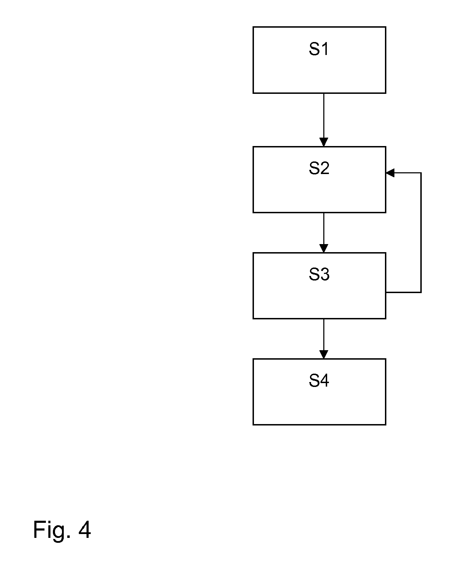

In Fig. 4 ist ein Ablaufdiagramm des erfindungsgemäßen Verfahrens gezeigt. Dabei wird in einem ersten Schritt S1 eine Sonotrode mit einem Sonotrodenkopf bereitgestellt, wobei der Sonotrodenkopf eine Aufnahme zum zumindest teilweisen Aufnehmen eines zu bearbeitenden oder zu verformenden, z.B. zu verrundenden, Bereichs eines Bauteils aufweist. Der zu bearbeitende oder zu verformende Bereich des Bauteils wird durch die Sonotrode mittels Ultraschall-Schlagbehandlung oder Ultraschallhämmern (UIT-Ultrasonic Impact Treatment) in einem nächsten Schritt S2 bearbeitet oder verformt, z.B. verrundet, und gleichzeitig verfestigt und der Sonotrodenkopf mit seiner Aufnahme anschließend in einem Schritt S3 relativ zu dem zu bearbeitenden oder zu verformenden Bereich des Bauteils weiter bewegt und der nächste Abschnitt des zu bearbeitenden oder zu verformenden, z.B. zu verrundenen, Bereichs des Bauteils bearbeitet oder verformt und gleichzeitig verfestigt. Die Schritte S2 und S3 können wiederholt werden, bis der gesamte zu bearbeitende oder zu verformende Bereich des Bauteils bearbeitet oder verformt wurde (Schritt S4). Dabei kann der zu bearbeitenden oder zu verformende Bereich des Bauteils durch den Sonotrodenkopf mit seiner Aufnahme wenigstens einmal oder auch mehrmals abgefahren werden, um diesen Bereich des Bauteils weiter zu bearbeiten oder zu verformen, z.B. weiter zu verrunden, und zusätzlich weiter zu verfestigen, je nach Funktion und Einsatzzweck. Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

### Bezugszeichenliste

- 10: Schaufelelement
- 12: Sonotrode
- 14: Schaufelkante oder Schaufelspitze
- 16: Sonotrodenkopf
- 18: Aufnahme
- 20: Manipulator
- 22: Spitze
- 24: Schaufelkantenkontur

## Patentansprüche

1. Verfahren zum Ausbilden eines Bereichs (14) eines Bauteils (10) mit einer vorbestimmten Kontur durch Ultraschall-Schlagbehandlung, wobei das Verfahren die folgenden Schritte aufweist:
Bereitstellen wenigstens einer Sonotrode (12) mit einem Sonotrodenkopf (16), wobei der Sonotrodenkopf (16) eine Aufnahme (18) zum zumindest teilweisen Aufnehmen des mit der vorbestimmten Kontur auszubildenden Bereichs (14) des Bauteils (10) aufweist;
Zumindest teilweises Aufnehmen des mit der vorbestimmten Kontur auszubildenden Bereichs (14) des Bauteils (10) in der Aufnahme (18) des Sonotrodenkopfes (16); und Bewegen der Sonotrode (12) und des Bauteils (10) relativ zueinander zum Ausbilden des dabei durch die Aufnahme (18) des Sonotrodenkopfes (16) geführten, Bereichs des Bauteils (10) mit der vorbestimmten Kontur durch Ultraschall-Schlagbehandlung.

2. Verfahren nach Anspruch 1, **dadurch gekennzeichnet, dass** das Verfahren ferner die Schritte aufweist:
Bewegen der Sonotrode (12) mit der Aufnahme (18) in dem Sonotrodenkopf (16) entlang des mit der vorbestimmten Kontur auszubildenden Bereichs (14) des Bauteils (10); und/oder
Bewegen des Bauteils (10) mit seinem mit der vorbestimmten Kontur auszubildenden Bereich (14) entlang der Aufnahme (18) des Sonotrodenkopfes (16) der Sonotrode (12).

3. Verfahren nach Anspruch 1 oder 2, **dadurch gekennzeichnet, dass** das Verfahren ferner den Schritt aufweist:
manuelles oder maschinelles Bewegen des Sonotrodenkopfes (16) und/oder des Bauteils (10), wobei das maschinelle Bewegen mittels eines Manipulators (20), insbesondere eines Roboters, erfolgt.

4. Verfahren nach wenigstens einem der vorhergehenden Ansprüche, **dadurch gekennzeichnet, dass** das Verfahren ferner den Schritt aufweist:
Anordnen der Aufnahme (18) des Sonotrodenkopfes (16) senkrecht zu dem mit der vorbestimmten Kontur auszubildenden Bereich (14) des Bauteils (10).

5. Verfahren nach wenigstens einem der vorhergehenden Ansprüche, **dadurch gekennzeichnet, dass** das Verfahren ferner den Schritt aufweist:
Oberflächenverrunden eines Bereichs (14) eines Schaufelelements (10), insbesondere eines Schaufelelements (10) einer Gasturbine, vorzugsweise einer Gasturbine eines Triebwerks.

6. Verfahren nach wenigstens einem der vorhergehenden Ansprüche, **dadurch gekennzeichnet, dass** das Verfahren ferner den Schritt aufweist:
Konstant halten und/oder Variieren der Leistung der Sonotrode (12) und insbesondere variieren der Leistung der Sonotrode zum Ausbilden des mit der vorbestimmten Kontur auszubildenden Bereichs (14) des Bauteils (10) mit einer wellenförmigen Kontur.

7. Verfahren nach wenigstens einem der vorhergehenden Ansprüche, **dadurch gekennzeichnet, dass** das Verfahren ferner den Schritt aufweist:
Ausbilden zumindest eines Teilbereichs des mit der vorbestimmten Kontur auszubildenden Bereichs (14) des Bauteils (10) mit einer weiteren, zweiten Sonotrode, wobei die zweite Sonotrode einen Sonotrodenkopf aufweist, wobei der Sonotrodenkopf (16) eine Aufnahme (18) zum zumindest teilweisen Aufnehmen des Teilbereichs des mit der vorbestimmten Kontur auszubildenden Bereichs (14) des Bauteils (10) aufweist;
Zumindest teilweises Aufnehmen des Teilbereichs des mit der vorbestimmten Kontur auszubildenden Bereichs (14) des Bauteils (10) in der Aufnahme (18) des Sonotrodenkopfes (16); und
Bewegen der zweiten Sonotrode (12) und des Bauteils (10) relativ zueinander zum Ausbilden des dabei durch die Aufnahme (18) des Sonotrodenkopfes (16) geführten, Teilbereichs des Bauteils (10) mit der vorbestimmten Kontur durch Ultraschall-Schlagbehandlung.

8. Verfahren nach einem der Ansprüche 5 bis 7, **dadurch gekennzeichnet, dass** das Verfahren ferner den Schritt aufweist:
Oberflächenverfestigen einer Schaufelkante (14) des Schaufelelements (10), wobei die Aufnahme (18) des Sonotrodenkopfes (16) eine vorbestimmte Schaufelkantenkontur (24) aufweist.

9. Verfahren nach einem der Ansprüche 5 bis 8, **dadurch gekennzeichnet, dass** das Verfahren den folgenden Schritt aufweist:
Vorsehen der Aufnahme (18) des Sonotrodenkopfes (16) mit einer Verrundung und verrunden der Schaufelkante (14) des Schaufelelements.

10. Schaufelelement (10), insbesondere einer Turbine, wobei ein Bereich (14) des Schaufelelementes (10) mittels des Verfahrens nach einem der Ansprüche 1 bis 9 oberflächenverfestigt ist.

11. Vorrichtung zum Ausbilden eines Bereichs (14) eines Bauteils (10) mit einer vorbestimmten Kontur durch Ultraschall-Schlagbehandlung, aufweisend:
wenigstens eine Sonotrode (12) mit einem Sonotrodenkopf (16), wobei der Sonotrodenkopf (16) eine Aufnahme (18) zum zumindest teilweisen Aufnehmen des mit der vorbestimmten Kontur auszubildenden Bereichs (14) des Bauteils (10) aufweist.

12. Vorrichtung nach Anspruch 10, **dadurch gekennzeichnet, dass** die Aufnahme (18) des Sonotrodenkopfes (16) eine Kontur oder einen Querschnitt des mit der vorbestimmten Kontur auszubildenden Bereichs (14) des Bauteils (10) aufweist, insbesondere eine Schaufelkantenkontur (24).

13. Vorrichtung nach Anspruch 11 oder 12, **dadurch gekennzeichnet, dass** die Sonotrode (12) manuelle und/oder maschinell bewegbar ausgebildet ist, insbesondere maschinell bewegbar mittels eines Roboters (20).

14. Vorrichtung nach einem der Ansprüche 11 bis 13, **dadurch gekennzeichnet, dass** die Aufnahme (18) als Vertiefung oder Rille in dem Sonotrodenkopf (16) ausgebildet ist, insbesondere als bogenförmige oder kreisbogenförmige Vertiefung bzw. Rille.

15. Vorrichtung nach einem der Ansprüche 11 bis 14, **dadurch gekennzeichnet, dass** der Sonotrodenkopf (16) aus Hartmetall besteht oder dieses aufweist.
